# FASCICULE DE BREVET EUROPEEN

(11) **EP 1 059 466 B1**
(45) Date de publication et mention de la délivrance du brevet: **19.11.2003**
(21) Numéro de dépôt: 00401590.5
(22) Date de dépôt: 06.06.2000
(51) Int. Cl.: F16F 1/371

(54) **Support antivibratoire équipé d'un câble limiteur inextensible**
Schwingungsdämpfer mit unausdehnbarem Kabelbegrenzer
Engine mount with non-elastic wire movement limiter

(30) Priorité: 09.06.1999 FR 9907263
(43) Date de publication de la demande: 13.12.2000
(73) Titulaire: HUTCHINSON, 75008 Paris (FR)
(72) Inventeur: Sauvat, Gilles, 28220 Cloyes sur le Loir (FR); Lor, Jean, 28200 Châteaudun (FR); Visage, Hervé, 28200 Châteaudun (FR); Durand, Sylvain, 45190 Villorceau (FR)
(74) Mandataire: Burbaud, Eric

(56) Documents cités:
- EP-A- 0 213 043
- EP-A- 0 622 560
- EP-A- 0 762 012
- FR-A- 2 340 834
- FR-A- 2 587 072

## Description

La présente invention est relative aux supports antivibratoires destinés à être interposés entre deux éléments rigides pour amortir des vibrations entre ces deux éléments, essentiellement selon un axe central, ce support comprenant :
- un corps en élastomère sensiblement centré sur l'axe central,
- une embase rigide qui est fixée au corps en élastomère et qui comporte une périphérie entourant ledit corps en élastomère, cette périphérie s'étendant sensiblement dans un plan perpendiculaire à l'axe central,
- une tête rigide fixée au corps en élastomère et écartée de l'embase selon l'axe central, et
- au moins un premier câble inextensible formé en boucle qui est fixé à l'embase et à la tête pour limiter l'écartement mutuel de cette embase et de cette tête, le câble comprenant une première partie qui prend appui sur la tête en la contournant et qui s'étend vers l'embase à partir de ladite tête.

Les câbles limiteurs de ce genre, qui sont utilisés à l'heure actuelle (EP-A-0 622 560), sont généralement constitués par des câbles inextensibles enroulés autour des supports antivibratoires dans un plan parallèle à l'axe central. Le document EP-A-0 518 759 décrit un exemple de support antivibratoire comportant un anneau limiteur.

L'inconvénient des câbles de ce type réside dans le fait que lorsque les supports présentent de grandes dimensions, les câbles doivent eux-mêmes présenter de grandes dimensions et, de plus, une rigidité suffisante. Dans ce cas, ces câbles nécessitent donc beaucoup de matière pour les fabriquer, ce qui les rend relativement chers.

Un autre inconvénient de ces câbles est qu'ils réduisent les portions des surfaces d'appui des supports antivibratoires qui permettent de relier le support entre les deux éléments rigides. Ainsi, la tenue en endurance, notamment des couvercles qui peuvent constituer l'une des surfaces d'appui de ces supports antivibratoires, s'en trouve diminuée.

Il existe par ailleurs des câbles limiteurs en U, qui sont destinés à entourer seulement une partie des supports antivibratoires. A cet effet, ils comportent un tronçon central qui est appliqué sur la tête du support, les deux extrémités libres du tronçon central étant fixées en des portions diamétralement opposées sur l'embase du support. Ces câbles ne sont toutefois pas satisfaisants car il existe un risque de voir leurs extrémités libres se désolidariser de l'embase par arrachement des embouts sertis ou surmoulés auxdites extrémités libres et/ou par rupture des zones de l'embase auxquelles ces embouts sont accrochés.

La présente invention a notamment pour but de remédier aux inconvénients précités des supports antivibratoires à câbles limiteurs formés en boucle, sans tomber dans les inconvénients des câbles limiteurs en U.

A cet effet, un support antivibratoire du genre en question, à câble limiteur formé en boucle, est essentiellement caractérisé en ce qu'il comprend une deuxième partie qui longe au moins une première portion de la périphérie de l'embase, cette deuxième partie complétant la première partie du premier câble pour constituer ladite boucle formée par le premier câble, le premier câble se trouvant ainsi entièrement compris entre la périphérie de l'embase et la tête,
en ce que la deuxième partie du premier câble contourne au moins un premier organe de renvoi appartenant à la périphérie de l'embase, au niveau de deux jonctions entre cette deuxième partie et la première partie du premier câble, le premier câble prenant appui sur le premier organe de renvoi de façon que ledit premier organe de renvoi empêche tout déplacement de la deuxième partie du premier câble vers la tête.

Ainsi, le câble entoure le support antivibratoire sur seulement une partie de sa hauteur, ce qui permet de dégager complètement la partie du support située à l'opposé de la tête, cette partie pouvant notamment être constituée notamment par un couvercle rigide fixé à l'embase.

Dans des formes de réalisation préférées de l'invention, on peut éventuellement avoir recours en outre à l'une et/ou à l'autre des dispositions suivantes :
- la deuxième partie du premier câble s'étend dans un plan sensiblement perpendiculaire à l'axe central ;
- les deux jonctions entre les première et deuxième parties du premier câble sont contenues respectivement dans des premier et second plans sécants qui passent par l'axe central et qui forment entre eux un angle compris entre environ 90° et environ 180° ;
- l'angle entre les premier et second plans sécants est compris entre environ 160° et environ 180° de sorte que la première partie du premier câble s'étend dans un plan sensiblement parallèle à l'axe central et voisin de cet axe central ;
- la première partie du premier câble s'étend dans un plan formant un angle aigu avec l'axe central ;
- le premier câble est formé d'une seule pièce ;
- le premier câble comporte, au voisinage de la moitié de sa deuxième partie, deux extrémités libres qui sont reliées entre elles par un moyen de connexion : ainsi, les extrémités libres du premier câble, qui sont agencées de manière suffisamment éloignée des zones de sollicitation de l'embase, ne sont soumises qu'à de faibles contraintes en traction, une large partie des contraintes de traction étant reprise par frottement entre le premier câble et la périphérie de l'embase ;
- ledit premier organe de renvoi est constitué par un ergot rigide et fixe ;
- le premier câble est maintenu en position par rapport au support par des moyens de retenue ;
- les moyens de retenue sont constitués par un brin élastiquement déformable, présentant deux extrémités solidarisées au premier câble respectivement au voisinage des deux jonctions entre les première et deuxième parties du premier câble, ce brin élastiquement déformable étant agencé autour d'une seconde portion de la périphérie de l'embase, cette seconde portion étant complémentaire de ladite première portion de la périphérie de l'embase ;
- les moyens de retenue comprennent au moins deux seconds organes de renvoi qui sont agencés fixement sur la périphérie de l'embase, respectivement à proximité des deux jonctions entre les première et deuxième parties du premier câble, et qui s'étendent vers l'extérieur dans deux directions opposées, la deuxième partie du premier câble serpentant entre le premier et les seconds organes de renvoi selon un trajet sinueux ;
- les moyens de retenue comprennent au moins deux troisièmes organes de renvoi qui sont agencés fixement sur la périphérie de l'embase, respectivement à proximité des seconds organes de renvoi, et qui s'étendent vers l'extérieur dans deux directions opposées, la première partie du premier câble serpentant entre les seconds et troisièmes organes de renvoi selon un trajet sinueux ;
- la périphérie de l'embase est munie de deux premiers organes de renvoi qui s'étendent respectivement vers l'extérieur dans deux directions opposées, ladite première partie du premier câble prenant appui sur ces premiers organes de renvoi respectivement au niveau de chacune de ses deux jonctions avec ladite deuxième partie du premier câble ;
- un deuxième câble inextensible, analogue au premier câble, est fixé à l'embase et à la tête à l'opposé du premier câble.

D'autres caractéristiques et avantages de la présente invention apparaîtront au cours de la description détaillée suivante de six de ses formes de réalisation, données à titre d'exemples non limitatifs, en regard des dessins joints.

Sur les dessins :
- les figures 1A à 1C sont respectivement des vues de côté, de face et de dessus d'un support antivibratoire selon une première forme de réalisation de l'invention,
- la figure 1D est une vue de dessus représentant le câble du support antivibratoire de la figure 1 avant montage,
- les figures 2A et 2B, 3A et 3B, 4A et 4B, 5A et 5B sont des vues partielles respectivement analogues aux figures 1A et 1B, respectivement pour des deuxième, troisième, quatrième et cinquième formes de réalisation de l'invention,
- la figure 6 est une vue de côté d'une sixième forme de réalisation de l'invention.

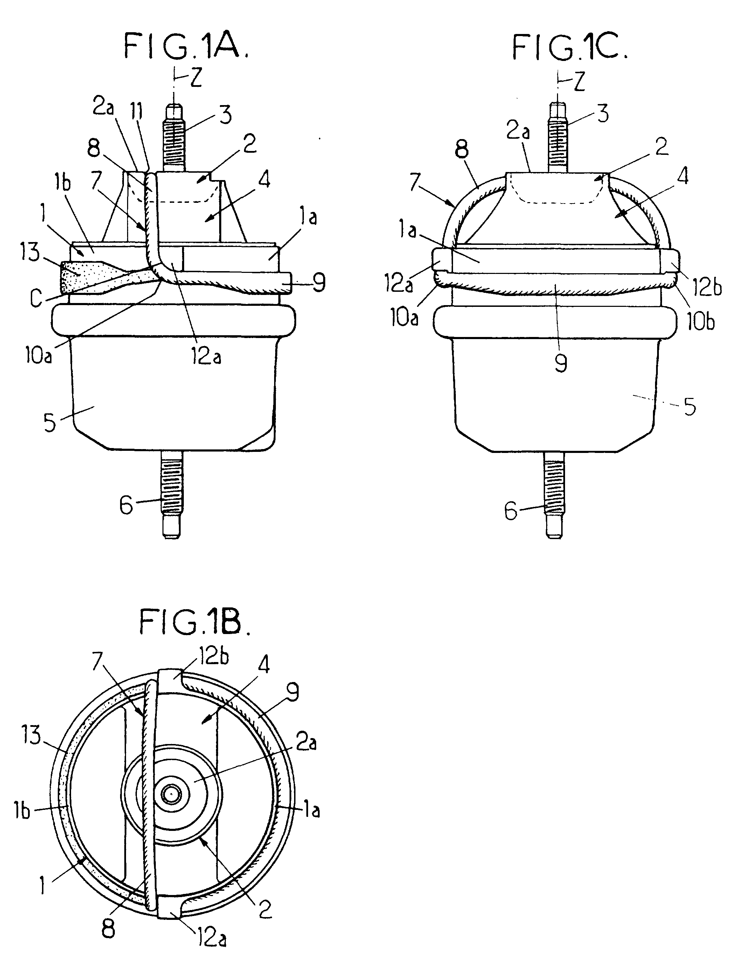

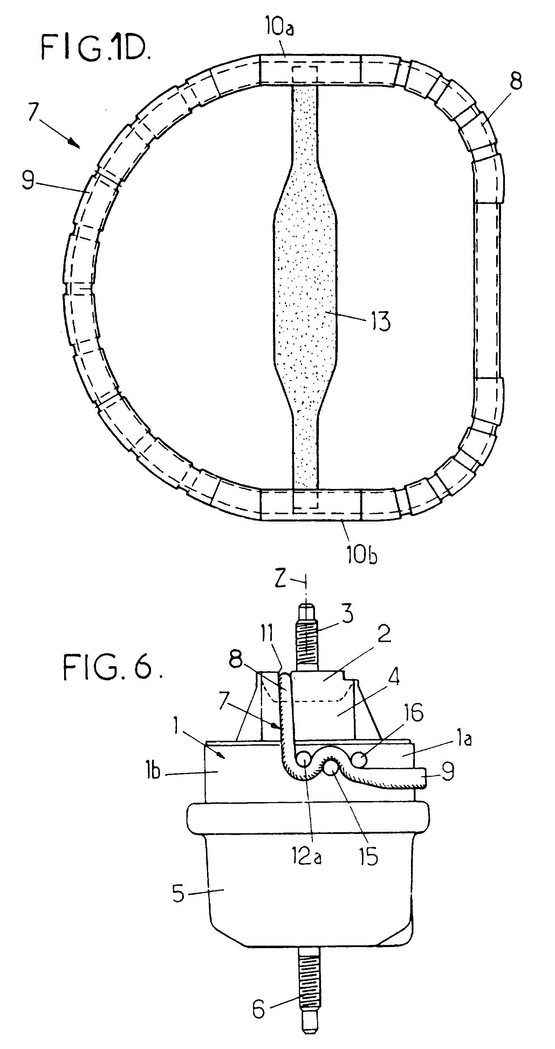

En référence aux figures 1 à 6, le support antivibratoire selon l'invention comprend principalement :
- une embase métallique extérieure 1 ayany par exemple une forme de révolution autour d'un axe Z pouvant être notamment vertical, cette embase comportant une périphérie annulaire externe s'étendant sensiblement dans un plan perpendiculaire à l'axe Z,
- une tête métallique supérieure 2 elle-même de révolution autour de l'axe Z, solidaire d'un goujon en attente 3 faisant saillie vers le haut,
- un corps en élastomère 4 sensiblement centré sur l'axe central Z et reliant l'embase 1 à la tête 2, ce corps 4 étant par exemple tronconique et étant surmoulé et adhérisé, par exemple par vulcanisation, sur sensiblement la totalité de la périphérie externe de la tête 2, et sur sensiblement la totalité de la périphérie interne de l'embase 1, le corps en élastomère 4 pouvant délimiter par exemple une chambre de travail remplie de liquide,
- un couvercle métallique 5 fixé de façon rigide sur le bord inférieur de l'embase 1, lequel est solidaire d'un goujon en attente 6 faisant saillie vers le bas, ce couvercle pouvant cacher par exemple un soufflet en élastomère qui délimite une chambre de compensation remplie de liquide et communiquant avec la chambre de travail par un passage étranglé,
- et au moins un câble 7 formé en boucle qui est fixé à l'embase 1 et à la tête 2, ledit câble ayant par exemple une section circulaire et étant constitué d'une matière inextensible telle qu'un métal non étirable, un matériau textile ou analogue, par exemple surmoulé d'élastomère.

A titre indicatif, l'embase 1, la tête 2 et le couvercle 5 du support antivibratoire peuvent être en aluminium moulé.

Comme on peut mieux le voir sur la figure 1D, le câble 7, qui équipe plus particulièrement le support antivibratoire selon la première forme de réalisation représentée sur les figures 1A à 1C, est constitué en une seule pièce. Le câble se présente, à l'état initial, sous la forme d'un anneau plan qui comporte une première partie sensiblement semi-rectangulaire 8, une deuxième partie sensiblement semi-circulaire 9, à angles arrondis, et deux parties sensiblement droites 10a et 10b qui forment respectivement deux jonctions opposées reliant chacune la première partie 8 à la deuxième partie 9.

La première partie 8 est dimensionnée de manière à ce que, une fois pliée perpendiculairement à la deuxième partie 9 au voisinage des deux jonctions 10a et 10b, en position d'utilisation, son grand côté repose en appui dans une gorge 11 formée sur la surface supérieure 2a de la tête 2 et ses petits côtés s'étendent sensiblement axialement, respectivement dans des zones diamétralement opposées par rapport au corps en élastomère 4, en direction de l'embase 1.

La deuxième partie 9 du câble 7 présente quant à elle un diamètre intérieur voisin du diamètre extérieur de l'embase 1 de manière à ce que, en position d'utilisation, comme on peut le voir sur les figures 1A à 1C, la deuxième partie 9 du câble entoure en contact étroit une moitié de la périphérie externe de cette embase, par exemple la moitié droite 1a.

Afin d'assurer un maintien du câble 7 qui soit capable de résister aux différentes contraintes en traction exercées sur le support antivibratoire, deux ergots rigides 12a et 12b, par exemple métalliques et dimensionnés de manière appropriée, sont agencés en saillie sur l'embase 1, dans deux directions diamétralement opposées. Ces ergots 12a et 12b sont positionnés sur l'embase 1 de manière à ce que, lorsque le câble 7 est en position d'utilisation, ils forment chacun une butée de renvoi, lesquelles sont contournées par la deuxième partie 9 du câble 7, respectivement au niveau des deux jonctions 10a et 10b de cette dernière avec la première partie 8 du câble 7.

Comme on peut mieux le voir sur la figure 1A, les ergots 12a et 12b comportent chacun, à cet effet, une portion C formant le côté de l'ergot qui est disposé latéralement le plus près de l'axe Z, et dont le contour courbe est suivi par les parties 10a et 10b du câble 7.

Les parties 10a et 10b du câble 7, qui présentent l'avantage d'être diamétralement opposées, permettent à la tête 2 d'être entourée sur toute sa hauteur par la première partie 8 du câble 7 et permettent à l'embase 1 d'être entourée sur la moitié de son diamètre par la deuxième partie 9 du câble 7. La limitation en traction du support est ainsi limité de manière optimale et ceci, à l'aide d'un seul câble.

Dans l'exemple représenté sur les figures 1A à 1D, le câble 7 comporte en outre un ruban 13 constitué d'une matière élastiquement déformable, qui est fixé, par ses extrémités libres, sur les parties 10a et 10b du câble 7. De préférence, le ruban 13 est moulé d'une seule pièce avec le câble 7, en élastomère.

Comme on peut le voir en référence aux figures 1A à 1D, le ruban 13 est destiné, lorsque le câble est en position d'utilisation, à être déformé de manière à entourer en contact étroit l'autre moitié de la périphérie externe de l'embase 1, c'est à dire la moitié gauche 1b. Le maintien en position du câble 7 autour du support antivibratoire est ainsi rendu plus sûr.

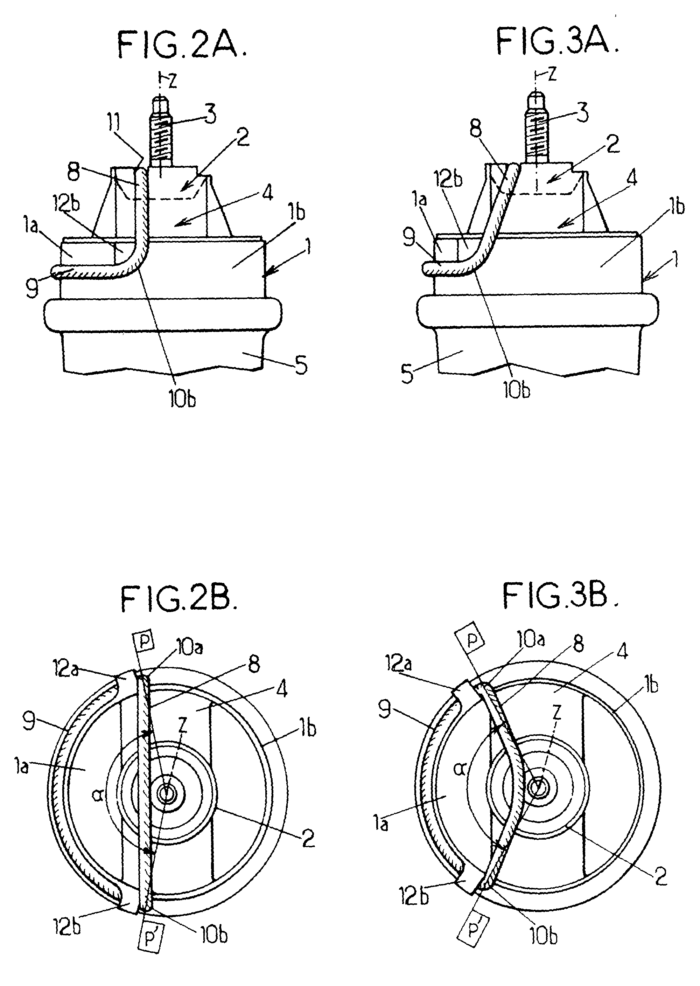

En référence aux figures 2A et 2B, la deuxième forme de réalisation représentée est analogue à la première forme de réalisation et s'en distingue principalement par une disposition légèrement différente des ergots 12a et 12b.

Dans cet exemple, les ergots 12a et 12b sont toujours opposés l'un à l'autre mais ne le sont plus diamétralement par rapport à l'embase 1. Plus précisément, ceux-ci sont disposés sur la moitié 1b de l'embase 1 de façon à ce que les deux jonctions 10a et 10b du câble 7 soient contenues respectivement dans deux plans sécants P et P', la sécante aux plans P et P' étant constituée par l'axe Z.

Dans l'exemple représenté, les plans P et P' font entre eux un angle α d'environ 165° de manière à ce que la première partie 8 du câble 7 reste dans un plan sensiblement parallèle à l'axe Z et proche de ce dernier, pour continuer ainsi à contourner pratiquement toute la hauteur de la tête 2.

Cette deuxième forme de réalisation présente l'intérêt de continuer à procurer un maintien suffisant entre l'embase 1 et la tête 2 au moyen d'un seul câble 7, avec pour avantage ici que le câble 7 présente des dimensions plus faibles que celles du câble utilisé dans la première forme de réalisation représentée sur les figures 1A à 1C. La deuxième forme de réalisation s'avère ainsi plus économique.

En outre, dans l'exemple représenté et comme cela a été envisagé dans la première forme de réalisation, le câble 7 pourra être équipé ou pas d'un ruban 13 pour améliorer le maintien entre l'embase 1 et la tête 2.

En référence aux figures 3A et 3B, la troisième forme de réalisation représentée est analogue à la deuxième forme de réalisation et s'en distingue uniquement par une distance latérale plus importante des ergots 12a et 12b par rapport à l'axe Z.

Dans l'exemple représenté, les plans P et P' font entre eux un angle α qui est égal à environ 125°, ce qui permet de réduire encore davantage les dimensions du câble 7. De plus, la première partie 8 du câble 7 est ici comprise dans un plan qui fait un angle non nul, mais aigu, avec l'axe Z.

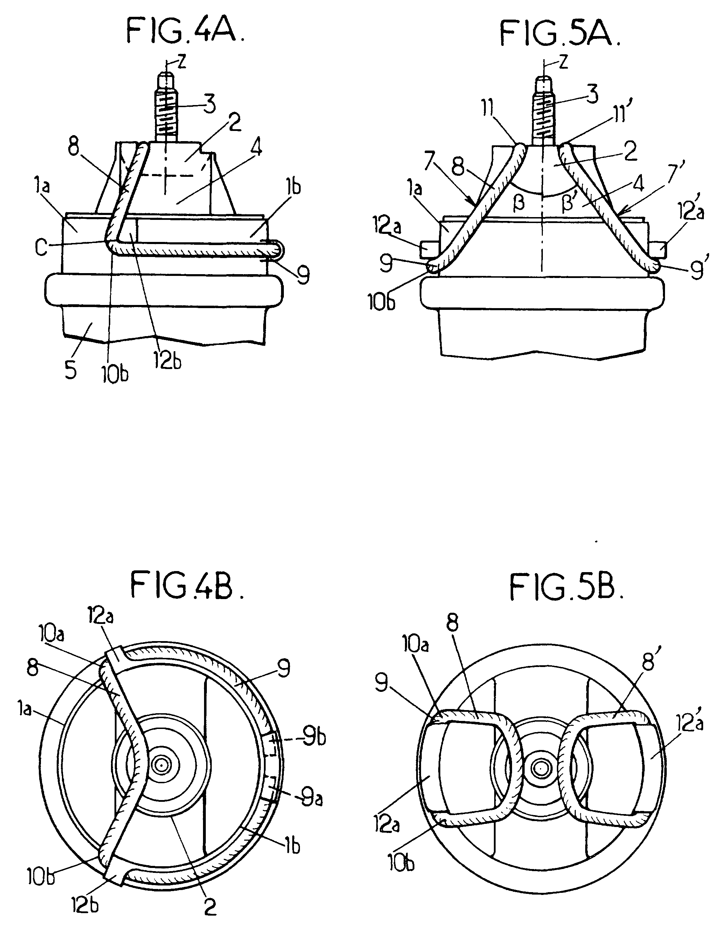

En référence aux figures 4A et 4B, la quatrième forme de réalisation est une variante de la troisième forme de réalisation précédente, selon laquelle la portion C à contour courbe de chacun des ergots 12a et 12b a été inversée par rapport à celle des ergots représentés sur les figures 2A à 3B, de manière à maintenant se situer latéralement le plus loin de l'axe Z.

A cet effet, le câble 7 a des dimensions plus importantes que celles des câbles utilisés dans les trois formes de réalisation décrites ci-dessus. En particulier, la deuxième partie 9 du câble 7 a une longueur adaptée pour pouvoir entourer en contact étroit plus de la moitié 1b de la périphérie externe de l'embase et, de ce fait, ne pas nécessiter d'élément de retenue complémentaire, tel que notamment le ruban 13.

En outre, le câble limiteur 7 se distingue de celui représenté sur les figures 1 à 3 par le fait que la deuxième partie 9 est ouverte dans son milieu de manière à comporter deux extrémités libres 9a et 9b qui sont raccordées entre elles par une douille rigide 14, par exemple métallique, laquelle est sertie sur les extrémités libres 9a et 9b du câble 7, par exemple par sertissage.

Compte tenu de l'agencement du câble 7 par rapport au support et, en particulier, de la disposition de ses extrémités libres 9a et 9b dans des zones de l'embase 1 relativement éloignées des zones de cette dernière qui sont soumises à de fortes contraintes en traction, lesdites extrémités libres 9a et 9b ne risquent pas de se détacher par arrachement.

En référence aux figures 5A et 5B, la cinquième forme de réalisation se distingue des précédentes par le fait que le support est entouré par un deuxième câble 7', et que chaque câble est maintenu sur le support par un seul ergot respectif 12a, 12'a au lieu de deux.

Dans l'exemple représenté, la boucle formée par le câble 7 présente sensiblement la forme d'un rectangle dont les deux grands côtés et l'un des petits côtés constituent la première partie 8 du câble 7, et dont l'autre petit côté constitue la deuxième partie 9 du câble 7.

La première partie 8 du câble 7 est dimensionnée pour qu'en position d'utilisation, le petit côté de cette dernière repose en appui sur la gorge 11 de la tête 2 et que ses grands côtés s'étendent vers l'embase 1 dans un plan formant un angle aigu β par rapport à l'axe central Z.

Le câble 7 est accroché à l'embase 1 par sa deuxième partie 9 qui passe en dessous et le long de l'ergot 12a, lequel s'étend sur une plus grande partie de la périphérie externe de l'embase 1 que chacun des ergots représentés sur les figures 1 à 4.

Le câble 7' , de la même façon que le câble 7, forme une boucle sensiblement rectangulaire, dont les deux grands côtés et l'un des petits côtés constituent la première partie 8' du câble 7', et dont l'autre petit côté constitue la deuxième partie 9' du câble 7'.

La première partie 8' du câble 7' est dimensionnée pour qu'en position d'utilisation, le petit côté de cette dernière repose en appui sur une gorge 11' formée dans la tête 2 dans une direction sensiblement parallèle à la gorge 11, et que ses grands côtés s'étendent vers l'embase 1 dans un plan formant un angle aigu β' par rapport à l'axe central Z.

Le câble 7' est accroché à l'embase 1 par sa deuxième partie 9' qui passe en dessous et le long de l'ergot 12'a, lequel est, dans cet exemple, diamétralement opposé à l'ergot 12a.

Dans une autre forme de réalisation particulièrement avantageuse du support antivibratoire selon l'invention, qui est représentée sur la figure 7, le câble 7 du support antivibratoire ne comporte plus de ruban élastique 13. La fonction remplie par le ruban 13 est assurée par au moins une paire d'ergots rigides et fixes, d'un type analogue à celui des ergots 12a et 12b, par exemple deux paires d'ergots 15, 16 (seul un ergot par paire est représenté, l'autre ergot 15, 16 de chaque paire s'étendant du côté opposé de l'embase 1). Les ergots 15 et 16 sont agencés successivement sur la moitié droite 1a de l'armature extérieure 1, à partir de l'ergot 12a (respectivement à partir de l'ergot 12b). L'ergot 15 est légèrement décalé, par exemple vers le bas, par rapport aux ergots 12 et 16, de manière à ce que la deuxième partie 9 du câble 7 serpente autour de ces ergots. Compte tenu de cet effet d'enroulement du câble 7, le maintien dudit câble autour de l'embase 1 est rendu plus solide.

Il va de soi que les formes de réalisation de l'invention qui ont été décrites ci-dessus ont été données à titre purement indicatif et nullement limitatif, et que de nombreuses modifications peuvent être facilement apportées par l'homme de l'art sans pour autant sortir du cadre de l'invention.

Ainsi, dans le cas où le câble 7 est solidaire d'un ruban 13, il pourrait être utile de prévoir un autre câble analogue au câble 7 qui serait agencé de manière à lui être diamétralement opposé, ce qui permettrait de doubler l'effort de maintien entre l'embase 1 et la tête 2.

Plus particulièrement dans le cas de la forme de réalisation représentée sur les figures 5A et 5B, on pourrait utiliser deux autres câbles en plus des câbles 7 et 7', de manière à entourer sensiblement toute la périphérie du support antivibratoire et limiter ainsi parfaitement l'écartement entre l'embase 1 et la tête 2.

D'une manière générale, on pourrait également imaginer de clipser chacun des ergots 12a, 12'a, 12b, 15 et 16 sur la partie 9 du câble 7 afin de renforcer davantage le maintien en position de ce dernier par rapport au support antivibratoire. On pourrait également imaginer, toujours dans le but de renforcer le maintien en position du câble 7 par rapport au support antivibratoire, de coiffer l'ensemble constitué par - l'embase 1, la tête 2 et le câble 7 - d'un couvercle d'un type analogue au couvercle 5 qui viendrait plaquer le câble 7 contre, notamment, l'embase 1.

Enfin, dans le cas où le câble 7 comporte deux extrémités libres 8a et 8b, il serait possible de se passer de la douille sertie 14, lesdites extrémités libres étant simplement fixées ensemble par surmoulage d'élastomère ou de matière plastique.

## Revendications

1. Support antivibratoire destiné à être interposé entre deux éléments rigides pour amortir des vibrations entre ces deux éléments, essentiellement selon un axe central (Z), ce support comprenant :
- un corps en élastomère (4) sensiblement centré sur l'axe central (Z),
- une embase rigide (1) qui est fixée au corps en élastomère (4) et qui comporte une périphérie entourant ledit corps en élastomère, cette périphérie s'étendant sensiblement dans un plan perpendiculaire à l'axe central (Z),
- une tête rigide (2) fixée au corps en élastomère (4) et écartée de l'embase (1) selon l'axe central (Z), et
- au moins un premier câble inextensible (7) formé en boucle qui est fixé à l'embase (1) et à la tête (2) pour limiter l'écartement mutuel de cette embase et de cette tête, le premier câble (7) comprenant une première partie (8) qui prend appui sur la tête (2) en la contournant et qui s'étend vers l'embase (1) à partir de ladite tête,
**caractérisé en ce que** le premier câble (7) comprend une deuxième partie (9) qui longe au moins une première portion de la périphérie de l'embase (1), cette deuxième partie complétant la première partie du premier câble (7) pour constituer ladite boucle formée par le premier câble, le premier câble (7) se trouvant ainsi entièrement compris entre la périphérie de l'embase (1) et la tête (2),
**en ce que** la deuxième partie (9) du premier câble (7) contourne au moins un premier organe de renvoi (12a, 12b) appartenant à la périphérie de l'embase (1), au niveau de deux jonctions (10a,10b) entre cette deuxième partie et la première partie du câble, le premier câble (7) prenant appui sur le premier organe de renvoi de façon que ledit premier organe de renvoi empêche tout déplacement de la deuxième partie (9) du premier câble (7) vers la tête (2).

2. Support selon la revendication 1, dans lequel la deuxième partie (9) du premier câble (7) s'étend dans un plan sensiblement perpendiculaire à l'axe central (Z).

3. Support selon l'une ou l'autre des revendications 1 et 2, dans lequel les deux jonctions (10a,10b) entre les première (8) et deuxième (9) parties du premier câble (7) sont contenues respectivement dans des premier et second plans sécants (P, P') qui passent par l'axe central (Z) et qui forment entre eux un angle a compris entre environ 90° et environ 180°.

4. Support selon la revendication 3, dans lequel l'angle a est compris entre environ 160° et environ 180° de sorte que la première partie (8) du premier câble (7) s'étend dans un plan sensiblement parallèle à l'axe central (Z) et voisin de cet axe central (Z).

5. Support selon l'une ou l'autre des revendications 1 et 2, dans lequel ladite première partie (8) du premier câble (7) s'étend dans un plan formant un angle aigu β avec l'axe central (Z).

6. Support selon l'une quelconque des revendications 1 à 5, dans lequel le premier câble (7) est formé d'une seule pièce.

7. Support selon l'une quelconque des revendications 1 à 6, dans lequel le premier câble (7) comporte, au voisinage de la moitié de sa deuxième partie (9), deux extrémités libres (8a, 8b) qui sont reliées entre elles par un moyen de connexion (14).

8. Support selon l'une quelconque des revendications 1 à 7, dans lequel ledit premier organe de renvoi (12a,12b) est constitué par un ergot rigide et fixe.

9. Support selon l'une quelconque des revendications 1 à 8, dans lequel le premier câble (7) est maintenu en position par rapport au support par des moyens de retenue (13, 15, 16).

10. Support selon la revendication 9, dans lequel les moyens de retenue sont constitués par un brin élastiquement déformable (13), présentant deux extrémités solidarisées au premier câble (7) respectivement au voisinage des deux jonctions (10a,10b) entre les première (8) et deuxième (9) parties du premier câble (7), ce brin élastiquement déformable étant agencé autour d'une seconde portion (1b) de la périphérie de l'embase (1), cette seconde portion étant complémentaire de ladite première portion (la) de la périphérie de l'embase (1).

11. Support selon la revendication 9, dans lequel les moyens de retenue comprennent au moins deux seconds organes de renvoi (15) qui sont agencés fixement sur la périphérie de l'embase (1), respectivement à proximité des deux jonctions (10a,10b) entre les première (8) et deuxième (9) parties du premier câble (7), et qui s'étendent vers l'extérieur dans deux directions opposées, la deuxième partie (9) du câble (7) serpentant entre le premier (12a,12b) et les seconds (15) organes de renvoi selon un trajet sinueux.

12. Support selon la revendication 11, dans lequel les moyens de retenue comprennent au moins deux troisièmes organes de renvoi (16) qui sont agencés fixement sur la périphérie de l'embase (1), respectivement à proximité des seconds organes de renvoi (15), et qui s'étendent vers l'extérieur dans deux directions opposées, la première partie (8) du câble (7) serpentant entre les seconds (15) et troisièmes (16) organes de renvoi selon un trajet sinueux.

13. Support selon l'une quelconque des revendications 1 à 12, dans lequel la périphérie de l'embase (1) est munie de deux premiers organes de renvoi (12a, 12b) qui s'étendent respectivement vers l'extérieur dans deux directions opposées, ladite première partie (8) du premier câble (7) prenant appui sur ces premiers organes de renvoi respectivement au niveau de chacune de ses deux jonctions avec la deuxième partie (9) du premier câble (7).

14. Support selon l'une quelconque des revendications 1 à 13, dans lequel un deuxième câble inextensible (7'), analogue au premier câble (7), est fixé à l'embase (1) et à la tête (2) à l'opposé du premier câble (7) par rapport à l'axe central (Z).

## Patentansprüche

1. Schwingungsdämpfendes Lager zum Anordnen zwischen zwei starren Elementen, um Schwingungen zwischen diesen beiden Elementen zu dämpfen, und zwar im Wesentlichen entlang einer zentralen Achse (Z), wobei dieses Lager folgendes aufweist:
- einen Elastomerkörper (4), der im Wesentlichen auf der zentralen Achse (Z) zentriert ist,
- eine starre Fußfläche (1), die an dem Elastomerkörper (4) befestigt ist und einen Außenumfang aufweist, der den Elastomerkörper umgibt und sich im Wesentlichen in einer Ebene erstreckt, die rechtwinklig zur zentralen Achse (Z) verläuft,
- einen starren Kopf (2), der am Elastomerkörper (4) befestigt ist und von der Fußfläche (1) entlang der zentralen Achse (Z) beabstandet ist, und
- zumindest ein erstes nicht-dehnbares Kabel (7), das eine Schleife bildet und an der Fußfläche (1) und dem Kopf (2) befestigt ist, um die wechselseitige Beabstandung zwischen dieser Fußfläche und dem Kopf zu beschränken, wobei das erste Kabel (7) einen ersten Bereich (8) aufweist, der den Kopf (2) berührt und dabei um ihn herumgeführt ist und sich von dem Kopf aus in Richtung der Fußfläche (1) erstreckt,
**dadurch gekennzeichnet, dass** das erste Kabel (7) noch einen zweiten Bereich (9) aufweist, der zumindest an einem ersten Bereich des Außenumfangs der Fußfläche (1) entlang verläuft und den ersten Bereich des ersten Kabels (7) vervollständigt, um die von dem ersten Kabel gebildete Schleife zu bilden, wobei sich das erste Kabel (7) so vollständig zwischen dem Außenumfang der Fußfläche (1) und dem Kopf (2) befindet,
und dass der zweite Bereich (9) des ersten Kabels (7) zumindest ein erstes Umlenkelement (12a, 12b) umgibt, das zu dem Außenumfang der Fußfläche (1) gehört, und zwar auf der Höhe von zwei Verbindungen (10a, 10b) zwischen diesem zweiten Bereich und dem ersten Bereich des Kabels, wobei das erste Kabel (7) das erste Umlenkelement so berührt, dass das erste Umlenkelement jede Bewegung des zweiten Bereichs (9) des ersten Kabels (7) in Richtung des Kopfes (2) verhindert.

2. Lager nach Anspruch 1, wobei der zweite Bereich (9) des ersten Kabels (7) sich in einer Ebene erstreckt, die im Wesentlichen rechtwinklig zur zentralen Achse (Z) verläuft.

3. Lager nach einem der Ansprüche 1 und 2, wobei die beiden Verbindungen (10a, 10b) zwischen dem ersten (8) und dem zweiten (9) Teil des ersten Kabels (7) sich in der ersten bzw. der zweiten Sekantenebene (P, P') befinden, die durch die zentrale Achse (Z) hindurch verlaufen und einen Winkel α bilden, der zwischen ungefähr 90° und ungefähr 180° liegt.

4. Lager nach Anspruch 3, bei welchem der Winkel α zwischen ungefähr 160° und ungefähr 180° liegt, so dass der erste Bereich (8) des ersten Kabels (7) sich in einer Ebene erstreckt, die im Wesentlichen parallel zur zentralen Achse (Z) verläuft und dieser zentralen Achse (Z) benachbart ist.

5. Lager nach einem der Ansprüche 1 und 2, wobei der erste Bereich (8) des ersten Kabels (7) sich in einer Ebene erstreckt, die einen spitzen Winkel β mit der zentralen Achse (Z) bildet.

6. Lager nach einem der Ansprüche 1 bis 5, wobei das erste Kabel (7) aus einem einzigen Stück geformt ist.

7. Lager nach einem der Ansprüche 1 bis 6, wobei das erste Kabel (7) in der Nähe der Hälfte seines zweiten Bereichs (9) zwei freie Enden (8a, 8b) aufweist, die miteinander über ein Verbindungsmittel (14) verbunden sind.

8. Lager nach einem der Ansprüche 1 bis 7, wobei das erste Umlenkelement (12a, 12b) durch einen starren und festen Vorsprung gebildet wird.

9. Lager nach einem der Ansprüche 1 bis 8, wobei das erste Kabel (7) bezüglich des Lagers durch Rückhaltemittel (13, 15, 16) in seiner Position gehalten wird.

10. Lager nach Anspruch 9, wobei die Rückhaltemittel durch einen elastischen verformbaren Faden (13) gebildet werden, der zwei mit dem ersten Kabel (7) in der Nähe der beiden Verbindungen (10a, 10b) zwischen dem ersten (8) und dem zweiten (9) Bereich des ersten Kabels (7) verbundene Enden aufweist, wobei dieser verformbaren elastische Faden um einen zweiten Bereich (1b) des Außenumfangs der Fußfläche (1) herum angeordnet ist, wobei dieser zweite Bereich komplementär zu dem besagten ersten Bereich (la) des Außenumfangs der Fußfläche (1) ist.

11. Lager nach Anspruch 9, wobei die Rückhaltemittel zumindest zwei zweite Umlenkelemente (15) aufweisen, die auf dem Außenumfang der Fußfläche (1) fest angeordnet sind, und zwar in der Nähe der beiden Verbindungen (10a, 10b) zwischen dem ersten (8) und dem zweiten (9) Bereich des ersten Kabels (7), und die sich in Richtung des Äußeren in zwei entgegengesetzten Richtungen erstrecken, wobei der zweite Bereich (9) des Kabels (7) zwischen dem ersten (12a, 12b) und den zweiten (19) Umlenkelementen gemäß einer sinusförmigen Bahn schlangenartig verläuft.

12. Lager nach Anspruch 11, wobei die Rückhaltemittel zumindest zwei dritte Umlenkelemente (16) aufweisen, die fest auf dem Außenumfang der Fußfläche (1) angeordnet sind, und zwar in der Nähe der zweiten Umlenkelemente (15), und die sich in Richtung des Äußeren in zwei entgegengesetzten Richtungen erstrecken, wobei der erste Bereich (8) des Kabels (7) zwischen den zweiten (15) und dritten (16) Umlenkelementen entlang einer sinusförmigen Bahn schlangenartig verläuft.

13. Lager nach einem der Ansprüche 1 bis 12, wobei der Außenumfang der Fußfläche (1) mit zwei ersten Umlenkelementen (12a, 12b) versehen ist, die sich in Richtung des Äußeren in zwei entgegengesetzten Richtungen erstrecken, wobei der erste Bereich (8) des ersten Kabels (7) diese beiden ersten Umlenkelemente auf der Höhe jeweils einer der beiden Verbindungen mit dem zweiten Bereich (9) des ersten Kabels (7) berührt.

14. Lager nach einem der Ansprüche 1 bis 13, wobei ein zweites nicht-dehnbares Kabel (7'), analog zum ersten Kabel (7), an der Fußfläche (1) und am Kopf (2) befestigt ist, und zwar dem ersten Kabel (7) bezüglich der zentralen Achse (Z) gegenüberliegend.

## Claims

1. Anti-vibration mount intended to be interposed between two rigid elements to damp vibrations between these two elements, essentially along a central axis (Z), this mount comprising:
- an elastomer body (4) substantially centred on the central axis (Z),
- a rigid base (1) which is fixed to the elastomer body (4) and which comprises a periphery surrounding said elastomer body (4), this periphery extending substantially in a plane perpendicular to the central axis (Z),
- a rigid head (2) fixed to the elastomer body (4) and offset from the base (1) along the central axis (Z), and
- at least a first non-extensible cable (7) formed in a loop which is fixed to the base (1) and to the head (2) to limit the distance between this base and this head, the first cable (7) comprising:
- a first part (8) which is held to the head (2) by winding around it and which extends towards the base (1), starting from the said head,
**characterized in that**:
- the first cable (7) comprises a second part (9) which runs along at least a first portion of the periphery of the base (1), this second part complementing the first part of the first cable (7) to form said loop formed by the first cable (7), the first cable (7) thus being entirely comprised between the periphery of the base (1) and the head, and **in that** the second part (9) of the first cable (7) winds around at least a first return element (12a, 12b) forming part of the periphery of the base (1), level with two joints (10a, 10b) between this second part and the first part of the cable, the first cable (7) being so restrained by the first return element that said first return element prevents any displacement of the second part (9) of the first cable (7) towards the head (2).

2. Mount according to Claim 1, in which the second part (9) of the first cable (7) extends in a plane substantially perpendicular to the central axis (Z).

3. Mount according to any of the preceding claims, in which the two joints (10a, 10b) between the first (8) and second (9) parts of the first cable (7) are contained respectively in the first and second intersecting planes (P, P') which pass through the central axis (Z) and which form an included angle α of between about 90° and about 180°.

4. Mount according to Claim 3, in which the angle α is of between about 160° and about 180°, so that the first part (8) of the first cable (7) extends in a plane substantially parallel to the central axis (Z) and adjacent to this central axis (Z).

5. Mount according to claim 1 or claim 2, in which the said first part (8) of the first cable (7) extends in a plane forming an acute angle β with the central axis (Z).

6. Mount according to any of claims 1 to 5, in which the first cable (7) is formed in one piece.

7. Mount according to any of claims 1 to 6, in which the first cable (7) comprises, in the vicinity of the middle of its second part (9), two free ends (8a, 8b) which are connected by a connecting means (14).

8. Mount according to any of claims 1 to 7, in which said first return element (12a, 12b) is formed by a rigid and fixed projection.

9. Mount according to any of claims 1 to 8, in which the first cable (7) is held in position in relation to the mount by retaining means (13, 15, 16).

10. Mount according to claim 9, in which the retaining means are constituted by an elastically deformable strap (13) which has two ends integrated with the first cable (7) in the vicinity of the two joints (10a, 10b) between the first (8) and second (9) parts of the first cable (7) respectively, this elastically deformable strap being positioned around a second portion (1b) of the periphery of the base (1), this second portion being complementary to said first portion (1a) of the periphery of the base (1).

11. Mount according to claim 9, in which the retaining means comprise at least two second return elements (15) which are located in fixed positions on the periphery of the base (1), in the vicinity of the two joints (10a, 10b) between the first (8) and second (9) parts of the first cable (7) respectively, and which extend outwardly in two opposed directions, the second part (9) of the cable (7) winding between the first (12a, 12b) and second (15) return elements along a sinuous path.

12. Mount according to claim 11, in which the retaining means comprise at least two third return elements (16) which are located in fixed positions on the periphery of the base (1), in the vicinity of the second return elements (15) respectively, and which extend outwardly in two opposed directions, the first part (8) of the cable (7) winding between the second (15) and third (16) return elements along a sinuous path.

13. Mount according to any of claims 1 to 12, in which the periphery of the base (1) is fitted with two first return elements (12a, 12b) extending outwardly in two opposed directions respectively, said first part (8) of the first cable (7) being restrained by said first return elements level with each of its two joints with the second part (9) of the first cable (7) respectively.

14. Mount according to any of claims 1 to 13, in which a second non-extensible cable (7') analogous to the first cable (7) is fixed to the base (1) and to the head (2) opposite to the first cable (7) in relation to the central axis (Z).
